# EUROPÄISCHE PATENTSCHRIFT

(11) **EP 1 805 720 B1**
(45) Veröffentlichungstag und Bekanntmachung des Hinweises auf die Patenterteilung: **25.08.2010**
(21) Anmeldenummer: 05752822.6
(22) Anmeldetag: 02.06.2005
(51) Int. Cl.: G07C 5/08, G07F 7/10

(54) **VERFAHREN ZUR SICHEREN DATENÜBERTRAGUNG**
METHOD FOR SECURELY TRANSMITTING DATA
PROCEDE DE TRANSMISSION SECURISEE DE DONNEES

(30) Priorität: 03.08.2004 DE 102004037801
(43) Veröffentlichungstag der Anmeldung: 11.07.2007
(73) Patentinhaber: Continental Automotive GmbH, 30165 Hannover (DE)
(72) Erfinder: LINDINGER, Andreas, 78658 Flözlingen (DE); SALM, Michael, 78112 Peterzell (DE)
(86) Internationale Anmeldenummer: PCT/EP2005/052530
(87) Internationale Veröffentlichungsnummer: WO 2006/013121

(56) Entgegenhaltungen:
- DE-A1- 10 210 320
- DE-A1- 19 843 424
- US-A- 5 767 505
- RANKL W ET AL: "AUTHENTISIERUNG" HANDBUCH DER CHIPKARTEN. AUFBAU - FUNKTIONSWEISE - EINSATZ VON SMART CARDS, MUNCHEN, CARL HANSER VERLAG, DE, 1996, Seiten 268-277, XP002127583 ISBN: 3-446-18893-2

## Beschreibung

Die Erfindung betrifft ein Verfahren zur sicheren Datenüberträgung zwischen einem ersten Teilnehmer und zweiten Teilnehmern, insbesondere einem Fahrtschreiber eines Nutzfahrzeuges und Speicherkarten mit jeweils mindestens einem Datenspeicher.

Verfahren zur sicheren Datenübertragung gewinnen zunehmend an Bedeutung und existieren bereits in umfassender Vielfalt im Bereich von Computernetzwerken. Im weiteren Sinne vergleichbar mit modernen Computernetzwerken ist auch das Zusammenwirken bzw. die sichere Datenübertragung eines digitalen Fahrtschreibers mit einer Speicherkarte gemäß der EG-Verordnung 3821/85. Zur Gewährleistung der Einhaltung bestehender Sozialvorschriften und Gesetze am Arbeitsplatz des Nutzfahrzeuges ist die Erhöhung der Manipulationssicherheit von besonderer Bedeutung. Daher werden strengste Maßstäbe an die Sicherheit der Datenübertragung gelegt. Hierzu ist ein System von Sicherheitszertifikaten umfassend verschiedene öffentliche und private Schlüssel entwickelt worden, welches im Einzelnen der vorgenannten Verordnung entnehmbar ist. Bevor ein erster Teilnehmer bzw. der Fahrtschreiber mit einem zweiten Teilnehmer bzw. einer Speicherkarte in einen Datenaustausch eintreten kann, ist unter anderem ein sehr aufwendiges Verfahren der Sicherheitszertifikatsverifikation auf beiden Seiten der Teilnehmerschaft erforderlich. Der Umfang dieses Vorgangs und die eingeschränkten Möglichkeiten der Datenverarbeitung in dem kleinformatigen Gerät machen besondere Vorkehrungen erforderlich, damit die Zugriffszeiten bei akzeptablem Kostenaufwand in einem vernünftigen Rahmen bleiben.

In der DE 102 10 320 A1 ist eine Methode einer dualen Aufzeichnung zur Fahrtzeitenkontrolle bei Lastkraftwagen offenbart. Eine eindeutige Identifizierung eines Bedieners sowie eine eindeutige Identifizierung eines bedienten Geräts werden von einer dem Bediener beziehungsweise dem Gerät zugeordneten Chipkarten-ID festgestellt. Es werden ferner ein Startdatum und eine Startzeit sowie ein aktuelles Datum und eine aktuelle Zeit angegeben. Während eines Betriebs des Geräts werden die Identifikationsinformationen sowie Informationen zu einer Betriebsdauer wiederholt aufgezeichnet und dieser Datensatz wird sicher und zeitgleich gespeichert. Es können Verschlüsselungs- und Entschlüsselungsmethoden vorgesehen sein, beispielsweise Methoden auf Basis von Public Key/Private Key. Die Methode kann eine Datenbank umfassen, die von einer zuständigen Behörde verwaltet wird und in der alle Fahrer-IDs und LKW-IDs sowie persönlichen oder unternehmerischen Daten gespeichert werden. So kann eine Authentizität der Karten geprüft und mit dem Bediener, dem Fahrer oder dem Gerät selbst verglichen werden.

In der DE 198 43 424 A1 ist eine Vorrichtung zum Liefern von Ausgangsdaten als Reaktion auf Eingangsdaten und ein Verfahren zum Überprüfen einer Authentizität und ein Verfahren zum verschlüsselten Übertragen von Informationen offenbart. Berechnete Ausgangsdaten werden zur Überprüfung der Authentizität der Vorrichtung verwendet. Die Eingangsdaten sind beliebig und zufällig. Die Vorrichtung ist als Smart Card ausgeführt. Eine Verifikation findet durch Vergleich mit einer Referenz- oder Prüfvorrichtung statt.

In der US 5,767,505 A ist ein Verfahren und ein System zum Bestimmen von Mautgebühren für Verkehrswege und/oder -gebiete offenbart. Eine Datenübertragung ist gesichert durch Authentisierungs- und Verschlüsselungsverfahren. Als Verschlüsselungsverfahren zum Verschlüsseln eines Fahrzeugkennzeichens ist ein Triple-DES-Verfahren vorgesehen.

In Rankl, W, et al.: "Handbuch der Chipkarten. Aufbau - Funktionsweise - Einsatz von Smart Cards", Kapitel 8.2 "Authentisierung", Carl Hanser Verlag, München, 1996, Seiten 268 bis' 277, sind Authentisierungsverfahren für Chipkarten offenbart.

Insbesondere sind asymmetrische Authentisierungsverfahren offenbart. Bei einer statischen asymmetrischen Authentisierung werden kartenindividuelle Daten bei einer Personalisierung in jede Chipkarte eingetragen und mit einem geheimen Schlüssel durch digitale Signatur unterschrieben. Ein Terminal besitzt einen öffentlichen Schlüssel und kann die von der Karte gelesene Signatur verschlüsseln und das Ergebnis mit den von der Karte gelesenen Daten vergleichen. Stimmen diese überein, so ist die Karte durch das Terminal authentisiert. Der öffentliche Schlüssel kann auch auf der jeweiligen Karte gespeichert sein und von dem Terminal gelesen werden. Bei einer dynamischen asymmetrischen Authentisierung generiert das Terminal eine Zufallszahl und sendet diese zur Chipkarte. Diese entschlüsselt die Zufallszahl mit dem geheimen Schlüssel und sendet das Ergebnis zum Terminal. Der öffentlicher Schlüssel wird für die Verschlüsselung der empfangenen Zufallszahl benutzt. Ist das Ergebnis identisch mit der vorher zur Chipkarte gesendeten Zufallszahl, so ist die Chipkarte durch das Terminal authentisiert. Eine gegenseitige Authentisierung von Chipkarte und Terminal ist in ihren Grundzügen analog der beschriebenen einseitigen aufgebaut.

In der EP 0 950 965 A2 ist ein Verfahren und ein System für ein Dokumentenmanagement basierend auf einem Dokumenteninhalt offenbart. Für eine Cache-Ersetzungsrichtlinie wird eine "Least Recently Used"-Richtlinie genutzt, bei der eine Relevanz eines Dokuments durch einen Kehrwert einer Zeitdauer seit einem letzten Zugriff auf das Dokument gebildet ist. Ein Dokument, das eine geringe Relevanz aufweist, weil lange Zeit nicht darauf zugegriffen wurde, ist der beste Kandidat für eine Entfernung des Dokuments aus dem Cache.

In der US 2001/0040987 A1 ist ein Fingerabdruckerkennungssystem offenbart. Ein Public-Key/Private-Key-System kann genutzt werden für eine Kommunikation zwischen einem Sensor und einem Verarbeitungssystem. Das System fordert ein Zertifikat an, das einen Identifikator bildet, der einem bestimmten Sensor zugeordnet ist. Das Zertifikat kann in dem Sensor gespeichert sein. Der Sensor antwortet mit dem Zertifikat. Das System überprüft eine Gültigkeit des Zertifikats mittels eines öffentlichen Schlüssels. Der Sensor weist einen zugehörigen privaten Schlüssel auf, Das System verschlüsselt eine Zufallszahl und einen Zeitstempel mittels des öffentlichen Schlüssels und sendet diese an den Sensor. Der Sensor entschlüsselt diese mittels seinem privaten Schlüssel. Die Zufallszahl wird als Sitzungsschlüssel genutzt.

In der WO 01/31841 A1 ist ein Verfahren und eine Vorrichtung offenbart zum Erweitern einer existierenden kryptographischen Infrastruktur. Eine Zertifikatkette beginnt mit einem Nutzerzertifikat, das auf einer Chipkarte oder in einer unter Kontrolle eine Zertifikatbehörde befindliche Zertifikatbibliothek gespeichert ist. Auf der Chipkarte ist ein privater Schlüssel des Nutzers gespeichert. Der zugehörige öffentliche Schlüssel ist durch das Nutzerzertifikat umfasst. Auf der Chipkarte ist ferner ein Adressidentifikator für die Zertifikatbibliothek gespeichert. Ein Verifikationsprozess beginnt mit dem Nutzerzertifikat und endet mit einem Wurzelzertifikat.

In der US 5,615,266 A ist ein Verfahren zum Einrichten einer sicheren Kommunikation offenbart. Dabei wird eine Benutzeridentität eines Kommunikationsparthers ermittelt. Entspricht die Benutzeridentität einer Benutzeridentität, die in einer Liste zugelassener Benutzeridentitäten enthalten ist, dann wird ein verkürzter Einrichtungsprozess durchgeführt. Der verkürzte Einrichtungsprozess unterscheidet sich von einem vollständigen Einrichtungsprozess dadurch, dass ein Verkehrsschlüssel benutzt wird, der von einer früher durchgeführten sicheren Kommunikationssitzung bekannt ist, und der daher schneller durchgeführt werden kann.

Daher hat es sich die Erfindung zur Aufgabe gemacht, den insbesondere zeitlichen Aufwand der Sicherheitszertifikatsverifikationen für die Teilnehmer des Datenaustauschs ohne Einbußen der Manipulationssicherheit zu reduzieren.

Zur Lösung der Aufgabe wird erfindungsgemäß ein Verfahren der eingangs genannten Art vorgeschlagen, bei welchem der erste Teilnehmer einen Speicher aufweist, in welchem eine bestimmte Anzahl Einträge gespeichert sind, jeweils umfassend Kennungen und zu diesem zugeordnete Sicherheitszertifikate zweiter Teilnehmer mit einer Erfassungszeit des Sicherheitszertifikates, und das Verfahren umfasst, dass der erste Teilnehmer von dem zweiten Teilnehmer eine Kennung einholt, der erste Teilnehmer diese Kennung mit den in dem Speicher gespeicherten Kennungen vergleicht, wenn eine übereinstimmende Kennung in dem Speicher gespeichert ist, dass dieser Kennung zugeordnete Sicherheitszertifikat Basis für eine nachfolgende Datenübertragung ist und die Erfassungszeit des Sicherheitszertifikates auf eine aktuelle Systemzeit aktualisiert wird, wenn keine übereinstimmende Kennung in dem Speicher gespeichert ist, der erste Teilnehmer eine Sicherheitszertifikatsverifikation mit dem zweiten Teilnehmer durchführt und bei Verifizierung einen dem verifizierten Sicherheitszertifikat entsprechenden Eintrag mit aktueller Erfassungszeit in dem Speicher speichert, wobei der Eintrag mit dem ältesten Erfassungsdatum durch diesen neuen Eintrag ersetzt wird, wenn die bestimmte Anzahl an Einträgen schon erreicht war. Dieses verifizierte Sicherheitszertifikat ist Basis für die nachfolgende Datenübertragung. Bei bekannter Kennung beziehungsweise erfolgreicher wechselseitiger Sicherheitszertifikatsverifikation folgt basierend auf dem Sicherheitszertifikat ein wechselseitiger Austausch einer Zufallszahl in verschlüsselter Form, mittels derer ein gemeinsamer Sitzungsschlüssel von beiden Teilnehmern unabhängig generiert wird, der nachfolgend der symmetrischen Verschlüsselung übertragener Daten dient.

Ein entscheidender Vorteil des erfindungsgemäßen Verfahrens liegt in der Einsparung des sehr zeitaufwendigen Vorganges der Sicherheitszertifikatsverifikation für den Fall, dass dem ersten Teilnehmer der zweite Teilnehmer auf Grund eines in der Vergangenheit bereits durchgeführten Verifikationsvorganges bekannt ist. Aus Speicherplatzgründen, insbesondere bei der Ausbildung des ersten Teilnehmers als Fahrtschreiber und des zweiten Teilnehmers als Speicherkarte, ist eine Begrenzung der Anzahl der Einträge umfassend die Sicherheitszertifikate und die Erfassungszeit der Sicherheitszertifikate anderer Teilnehmer begrenzt. Um trotz dieser Begrenzung das "Erinnerungsvermögen" des ersten Teilnehmers an zweite Teilnehmer auf eine Höchstanzahl an zweiten Teilnehmern zu optimieren, sieht das erfindungsgemäße Verfahren nicht eine einfache Ringspeicherung in chronologischer Abfolge des Auftretens der zweiten Teilnehmer vor, so dass stets beispielsweise der älteste Eintrag mit dem neuesten Eintrag überschrieben wird, wenn eine speicherplatzbedingte Höchstzahl an Einträgen schon erreicht war. Statt dessen wird zunächst der Inhalt des Speichers des ersten Teilnehmers daraufhin überprüft, ob bereits ein Eintrag mit identischer Kennung zu derjenigen des neuen Teilnehmers existiert, der im bejahenden Fall lediglich hinsichtlich des Erfassungsdatums und gegebenenfalls hinsichtlich des Ablaufs der Gültigkeit des Sicherheitszertifikates aktualisiert wird. Auf diese Weise sind dem ersten Teilnehmer, vorausgesetzt es wurde in der Vergangenheit bereits eine die bestimmte Anzahl an Speichereinträgen übersteigende Anzahl unterschiedlicher zweiter Teilnehmer verifiziert, stets die bestimmte Anzahl an zweiten Teilnehmern bekannt. Auf diese Weise kann die bestimmte Anzahl entsprechend den Gepflogenheiten beispielsweise eines Fuhrparks an die Anzahl der dort tätigen oder üblicherweise mit dem Nutzfahrzeug arbeitenden unterschiedlichen Karteninhaber angepasst werden und so eine optimale Nutzung des Speichers des ersten Teilnehmers erreicht werden. Die Zugriffszeiten bleiben vorteilhaft kurz, da auch bei wiederholtem Trennen und Verbinden des ersten Teilnehmers und des zweiten Teilnehmers stets nur die der Identität des ersten Teilnehmers zugeordneten Einträge verändert bzw. aktualisiert werden.

Mit Vorteil ist die zur Identifizierung übermittelte Kennung der Teilnehmer ein öffentlicher Schlüssel eines RSA-Verfahrens (Verfahren zum Ver- und Entschlüsseln nach Ronald L. Rivest, Adi Schamir und Leonard Adleman) des zweiten Teilnehmers ist. Dieser öffentliche Schlüssel kann einerseits einer nachträglichen Datenübermittlung dienen und ist andererseits eindeutig.

Aus Gründen der Ersparnis von Rechenaufwand sieht eine vorteilhafte Weiterbildung vor, dass eine nachfolgende Datenübertragung mittels einer symmetrischen Verschlüsselung, insbesondere eines Triple-DES-Verfahrens erfolgt. Im Wesentlichen bleibt hierbei die Sicherheit des asymmetrischen Verschlüsselungsverfahrens erhalten, da die Generierung des Sitzungsschlüssels für das symmetrische Verfahren nur demjenigen möglich ist, der zuvor mittels des asymmetrischen Verfahrens in der Lage war, mit dem anderen Teilnehmer zu kommunizieren bzw. die wechselseitig übermittelte Zufallszahl zu dechiffrieren.

Eine wichtige Position hinsichtlich der Manipulationssicherheit übernimmt gemäß dem Verfahren nach der Erfindung die Verifikation der Sicherheitszertifikate durch den jeweils anderen Teilnehmer, weshalb diese zweckmäßig folgender n Schritte umfasst:

In einem ersten Schritt übersendet der zweite Teilnehmer dem ersten Teilnehmer ein erstes Sicherheitszertifikat, welches der zweite Teilnehmer unter Benutzung eines ersten öffentlichen Schlüssels einer Verifizierung unterzieht und hierbei einen zweiten öffentlichen Schlüssel ermittelt. Resultiert die Verifizierung in Authentizität des übermittelten Sicherheitszertifikates, wird der erste Schritt unter Verwendung eines weiteren übersendeten Sicherheitszertifikates und des im vorhergehenden Schritt ermittelten zweiten öffentlichen Schlüssels anstelle des ersten öffentlichen Schlüssels (n-1)-fach wiederholt, wobei sich stets ein neuer zweiter öffentlicher Schlüssel und ein Verifizierungsergebnis ergibt. Diese verschachtelte Verifizierung kann zweckmäßig 3(=n)-fach wiederholt werden, was eine sehr hohe Manipulationssicherheit zum Ergebnis hat.

In der Folge ist die Erfindung anhand eines speziellen Ausführungsbeispiels unter Bezugnahme auf Zeichnungen zur Verdeutlichung näher beschrieben. Es zeigen:
- Figur 1: eine schematische Darstellung des erfindungsgemäßen Verfahrens in Form eines Flussdiagramms,
- Figur 2: ein Flussdiagramm des Vorgangs der Sicherheitszer- tifikatsverifizierung,
- Figur 3: Einträge bekannter zweiter Teilnehmer in einem Speicher eines ersten Teilnehmers.

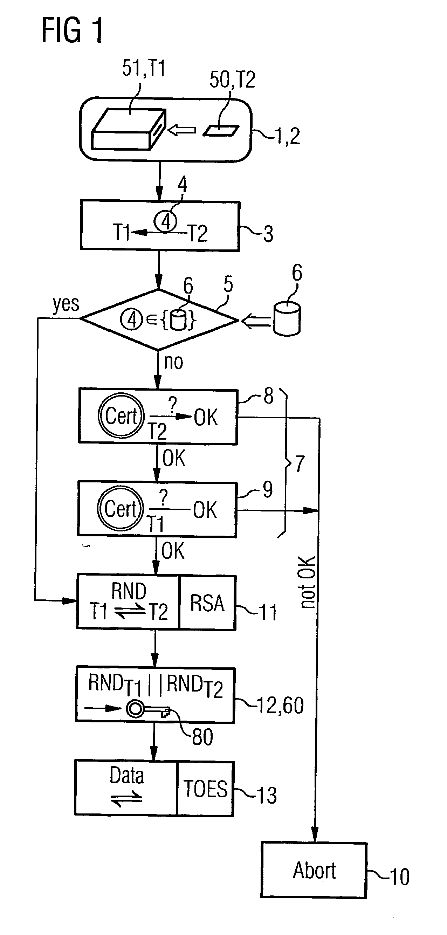

Das Flussdiagramm der Figur 1 zeigt beispielhaft wesentliche Züge des Ablaufes eines erfindungsgemäßen Verfahrens an einem Datenaustausch zwischen einem digitalen Fahrtschreiber 51 und einer Speicherkarte 50.

Das einleitende Ereignis 1 besteht in der Aufnahme 2 der Speicherkarte 50 mittels des Fahrtschreibers 51. Im Rahmen der Aufnahme 2 der Speicherkarte 50, welche im erfindungsgemäßen Sinne ein zweiter Teilnehmer T2 ist, stellt der Fahrtschreiber, welcher im erfindungsgemäßen Sinne ein erster Teilnehmer T1 ist, eine leitende Verbindung zu einem Datenspeicher der Speicherkarte 50 her, mittels derer Datensignale übertragbar sind.

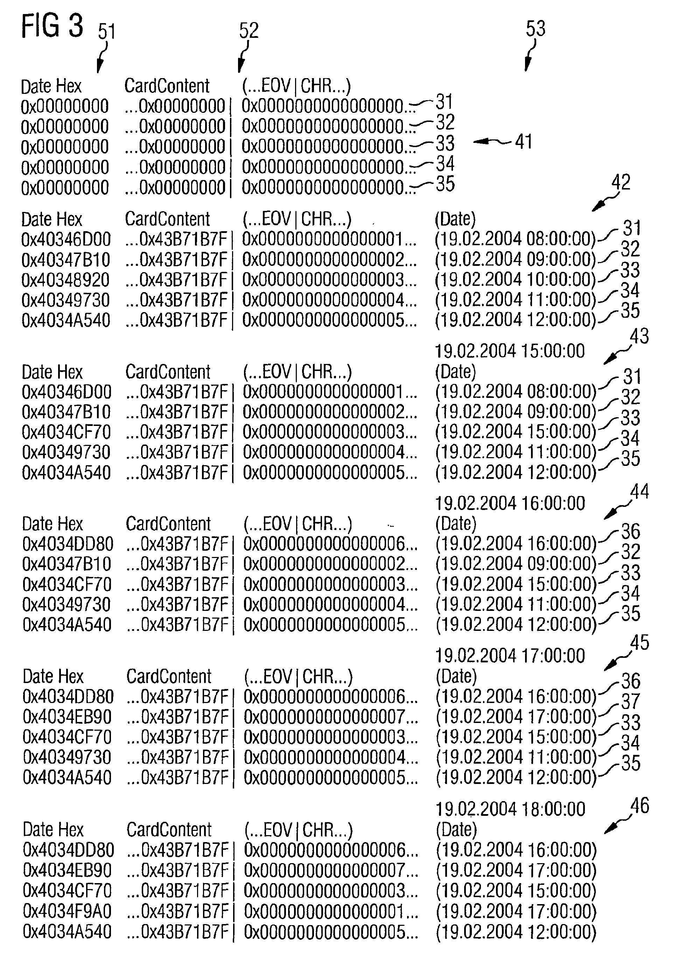

In einem zweiten Schritt 3 holt der Fahrtschreiber 51 als erster Teilnehmer T1 von der Speicherkarte 50 als zweiten Teilnehmer T2 eine Kennung 4 ein und überprüft in einem dritten Schritt 5, ob die Kennung 4 bereits aus einem vorhergehenden Vorgang bekannt ist. Hierzu greift der Fahrtschreiber 51 auf einen integrierten Speicher 6 zu, in welchem Einträge mit in Figur 3 näher beschriebenem Umfang abgelegt sind.

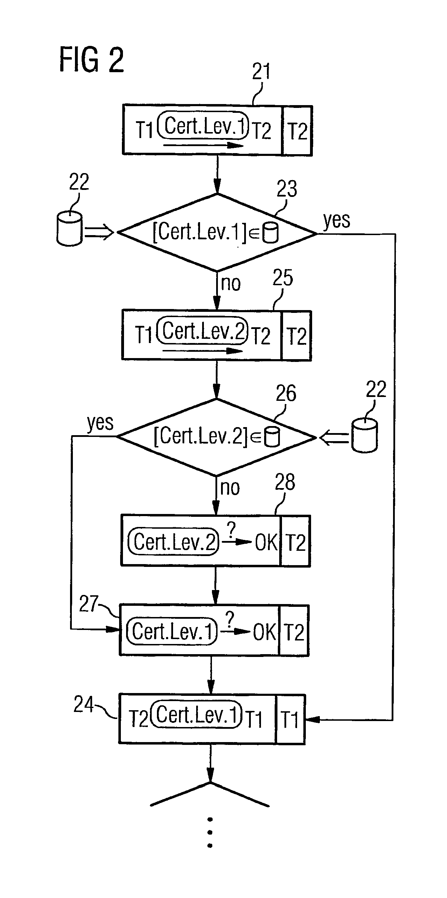

Ist im Speicher 6 kein mit der Kennung 4 der Speicherkarte 50 abgelegter Eintrag vorhanden, geht das erfindungsgemäße Verfahren zu einer wechselseitigen Sicherheitszertifikatsverifikation 7 über. Hierbei werden während einer ersten Sicherheitszertifikatsverifikation Sicherheitszertifikate der Speicherkarte 50 mittels des Fahrtschreibers auf Gültigkeit, Bekanntheit und Authentizität gemäß Figur 2 überprüft, und anschließend findet eine entsprechende zweite Überprüfung 9 des Fahrtschreibers 51 seitens der Speicherkarte 50 statt.

Die Schritte 8 und 9 werden übersprungen, wenn im Schritt 5 der zweite Teilnehmer T2 bzw. die Speicherkarte 50 seitens des ersten Teilnehmers T1 als bekannt identifiziert wurde. Ist das endgültige Ergebnis einer Sicherheitszertifikatsverifikation gemäß der Schritt 8, 9 die Nicht-Verifikation, wird die Speicherkarte 50 bzw. der erste Teilnehmer T1 in einem Schritt 10 ausgegeben bzw. abgewiesen.

Bei erfolgreicher wechselseitiger Verifikation bzw. bekannter Kennung 4 folgt in einem Schritt 11 ein wechselseitiger Austausch einer Zufallszahl in RSA-verschlüsselter Form, mittels derer in einem Schritt 12 ein gemeinsamer Sitzungsschlüssel 60 von beiden Teilnehmern T1, T2 unabhängig generiert wird, der im nachfolgenden Schritt 13 der symmetrischen Verschlüsselung übertragener Daten dient.

In Figur 2 ist die Sicherheitszertifikatsverifikation gemäß der Schritte 8, 9 in Figur 1 im Detail dargestellt. In einem ersten Schritt 21 holt der zweite Teilnehmer T2 von dem ersten Teilnehmer T1 ein Sicherheitszertifikat Cert.Lev.1 der ersten Ebene ein. Anhand von Einträgen eines Speichers 22 wird in einem zweiten Schritt 23 überprüft, ob der öffentliche Schlüssel oder eine Kennung des Sicherheitszertifikats Cert.Lev.1 der ersten Ebene bereits bekannt und noch gültig ist. Für den Fall der Gültigkeit und Bekanntheit geht das dargestellt Verfahren direkt zu einem Schritt 24 über, währenddessen der erste Teilnehmer T1 das Sicherheitszertifikat des zweiten Teilnehmers T2 in gleicher, nicht mehr gesondert dargestellter Weise einer Überprüfung unterzieht. Ist der öffentliche Schlüssel des Sicherheitszertifikats Cert.Lev.1 der Ebene 1 in dem Schritt 23 als nicht bekannt identifiziert worden, holt der zweite Teilnehmer T2 von dem ersten Teilnehmer T1 ein Sicherheitszertifikat Cert.Lev.2 der Ebene 2 in einem nachfolgenden Schritt 25 ein. Entsprechend dem Schritt 23 folgt in analoger Weise ein Schritt 26, währenddessen der zweite Teilnehmer T2 unter Zugriff auf den Speicher 22 die Bekanntheit und Gültigkeit eines öffentlichen Schlüssels des Sicherheitszertifikats Cert.Lev.2 der Ebene 2 überprüft. Ist das Ergebnis der Überprüfung Bestätigung der Bekanntheit und Gültigkeit, geht das Verfahren direkt zu einem Verifizierungsschritt 27 über, währenddessen das Sicherheitszertifikat Cert.Lev.1 Ebene 1 einer Verifizierung unterzogen wird. Ist der öffentliche Schlüssel des Sicherheitszertifikats Cert.Lev.2 der Ebene 2 nicht bekannt und gültig, folgt zunächst die Verifizierung des Sicherheitszertifikats Cert.Lev.2 der Ebene 2 in einem Schritt 28, bevor die Verifizierung gemäß Schritt 27 eingeleitet wird. Haben die Überprüfungen der Schritte 27 und 28 Verifizierung der Sicherheitszertifikate Cert.Lev.1,2 der Ebene 1 und Ebene 2 zum Ergebnis, geht das Verfahren zum Schritt 24 über, welches eine bezüglich der Teilnehmer T1 und T2 umgekehrte Sicherheitszertifikatsverifikation einleitet.

Die Figur 3 zeigt den Inhalt des Speichers 22 bzw. 6 in Abhängigkeit eines Kommunikationseintrittes verschiedener zweiter Teilnehmer T2 mit einem ersten Teilnehmer T1. Die Größe des Speichers 6, 22 ist auf fünf Einträge 31-35 begrenzt. Es sind sechs aufeinander folgende Zustände 41-46 in Figur 3 abgebildet, die jeweils die Einträge 31-34 nach bestimmten Ereignissen wiedergeben. Die dargestellten Einträge 31-34 umfassen ein Datum 51, dessen Wert in hexadezimaler Schreibweise als Wert in Sekunden seit dem 1.1.1970 abgelegt ist. Daneben umfassen die Einträge 31-35 einen Sicherheitszertifikatsinhalt 52, der einen Ablauf EOV der Gültigkeit des Sicherheitszertifikats und eine Referenz CHR des Sicherheitszertifikatinhabers umfasst. Daneben umfassen die Einträge 31-35 auch die Erfassungszeit 53.

Der Zustand 41 zeigt den Ausgangszustand, der charakterisiert ist durch neutrale Einträge.

Der Zustand 42 liegt vor, nachdem fünf verschiedene zweite Teilnehmer T2 bzw. Speicherkarten 50 mit dem Teilnehmer T1 bzw. einem Fahrtschreiber 51 in datenübertragenden Kontakt getreten sind. Demzufolge ist jeder Eintrag 31-35 nun gekennzeichnet durch ein anderes Datum, einen unterschiedlichen Sicherheitszertifikatsinhalt 52 und eine andere Erfassungszeit 53.

Der Zustand 43 stellt sich ein, nachdem ein zweiter Teilnehmer ursprünglich charakterisiert durch den Eintrag 33 zu einem späteren Zeitpunkt nochmals mit dem ersten Teilnehmer T1 in einen datenübertragenden Kontakt getreten ist. Demzufolge hat sich die Erfassungszeit 53 des Eintrages 33 aktualisiert.

Der Zustand 44 stellt sich ein, wenn bereits eine der Obergrenze an Einträgen 31-35 entsprechende Anzahl jeweils auf Grund einer Verbindung mit einem zweiten Teilnehmer T2 deneutralisiert worden sind und ein weiterer, bisher noch nicht bekannter zweiter Teilnehmer T2 mit dem ersten Teilnehmer T1 in einen datenübertragenden Kontakt tritt. Der gemäß der Erfassungszeit 53 älteste Eintrag 31 ist erfindungsgemäß mit einem neuen Eintrag 36 überschrieben.

In analoger Weise wird der Eintrag 32 in Zustand 45 von einem Eintrag 37 ersetzt.

Zustand 46 stellt sich ein, wenn ein mit dem ursprünglichen Eintrag 31 korrespondierender zweiter Teilnehmer T2 nochmals mit dem ersten Teilnehmer T1 eine datenübertragende Verbindung eingeht. Auch hier wird der nunmehr älteste Eintrag 34 von dem Eintrag 31, der einem in Folge des Überschriebs aus Zustand 44 unbekannten zweiten Teilnehmer T2 zugeordnet ist, ersetzt.

## Patentansprüche

1. Verfahren zur sicheren Datenübertragung zwischen einem ersten Teilnehmer (T1) und zweiten Teilnehmern (T2), insbesondere zwischen einem Fahrtschreiber (51) eines Nutzfahrzeuges und Speicherkarten (50) mit jeweils mindestens einem Datenspeicher, wobei der erste Teilnehmer (T1) einen Speicher (6, 22) aufweist, in welchem eine bestimmte Anzahl Einträge (31-35) gespeichert sind, jeweils umfassend Kennungen (4) zweiter Teilnehmer (T2), welches Verfahren umfasst, dass der erste Teilnehmer (T1) von dem zweiten Teilnehmer (T2) eine Kennung (4) einholt und der erste Teilnehmer (T1) diese Kennung (4) mit den in dem Speicher (6, 22) gespeicherten Kennungen (4) vergleicht,
**dadurch gekennzeichnet, dass**
die Einträge (31-35) jeweils zu den Kennungen (4) zugeordnete Sicherheitszertifikate (Cert) zweiter Teilnehmer (T2) umfassen mit einer Erfassungszeit (53) des Sicherheitszertifikates (Cert) und das Verfahren umfasst, dass, wenn eine übereinstimmende Kennung (4) in dem Speicher (6, 22) gespeichert ist, das dieser Kennung (4) zugeordnete Sicherheitszertifikat (Cert) Basis für eine nachfolgende verschlüsselte Datenübertragung ist und die Erfassungszeit (53) des Sicherheitszertifikates (Cert) auf eine aktuelle Systemzeit aktualisiert wird,
wenn keine übereinstimmende Kennung (4) in dem Speicher (6, 22) gespeichert ist, der erste Teilnehmer (T1) eine Sicherheitszertifikatsverifikation mit dem zweiten Teilnehmer (T2) durchführt und bei Verifizierung einen dem verifizierten Sicherheitszertifikat (Cert) entsprechenden Eintrag (31-35) mit aktueller Erfassungszeit (53) in dem Speicher (6, 22) speichert, wobei der Eintrag (31-35) mit dem ältesten Erfassungsdatum durch diesen neuen Eintrag (31-35) ersetzt wird, wenn die bestimmte Anzahl an Einträgen (31-35) schon erreicht war, und dieses verifizierte Sicherheitszertifikat (Cert) Basis für die nachfolgende verschlüsselte Datenübertragung ist,
und bei bekannter Kennung (4) beziehungsweise erfolgreicher wechselseitiger Sicherheitszertifikatsverfikation basierend auf dem Sicherheitszertifikat (Cert) ein wechselseitiger Austausch einer Zufallszahl (RND) in RSA-verschlüsselter Form folgt, mittels derer ein gemeinsamer Sitzungsschlüssel (60) von beiden Teilnehmern (T1, T2) unabhängig generiert wird, der nachfolgend der symmetrischen Verschlüsselung übertragener Daten dient.

2. Verfahren nach Anspruch 1, **dadurch gekennzeichnet, dass** die Kennung (4) ein öffentlicher Schlüssel eines RSA-Verfahrens des zweiten Teilnehmers (T2) ist.

3. Verfahren nach Anspruch 1, **dadurch gekennzeichnet, dass** die nachfolgende symmetrisch verschlüsselte Datenübertragung TDES-verschlüsselt erfolgt.

4. Verfahren nach Anspruch 1, **dadurch gekennzeichnet, dass** die Verifikation des Sicherheitszertifikats (Cert) des ersten Teilnehmers (T1) durch den zweiten Teilnehmer (T2) und umgekehrt folgende n Schritte umfasst:
in einem ersten Schritt übersendet der zweite Teilnehmer (T2) dem ersten Teilnehmer (T1) ein erstes Sicherheitszertifikat (Cert.Lev.1), welches der zweite Teilnehmer (T2) unter Benutzung eines ersten öffentlichen Schlüssels einer Verifizierung unterzieht und hierbei einen zweiten öffentlichen Schlüssel ermittelt, resultiert die Verifizierung in Authentizität,
wird der erste Schritt unter Verwendung eines weiteren übersendeten Sicherheitszertifikats (Cert.Lev.1,2) und des im vorhergehenden Schritt ermittelten zweiten öffentlichen Schlüssels an Stelle des ersten öffentlichen Schlüssels (n-1)-fach wiederholt, wobei sich stets ein neuer zweiter öffentlicher Schlüssel und ein Verifizierungsergebnis ergibt.

5. Verfahren nach Anspruch 1, **dadurch gekennzeichnet, dass** n=3 ist.

## Claims

1. Method for secure data transmission between a first subscriber (T1) and second subscribers (T2), particularly between a tachograph (51) in a commercial vehicle and memory cards (50) having at least one respective data store, where the first subscriber (T1) has a memory (6, 22) which stores a particular number of entries (31-35), each comprising identifiers (4) from second subscribers (T2), which method involves the first subscriber (T1) fetching an identifier (4) from the second subscriber (T2), and the first subscriber (T1) comparing this identifier (4) with the identifiers (4) stored in the memory (6, 22),
**characterized in that**
the entries (31-35) each comprise security certificates (Cert), associated with the identifiers (4), from second subscribers (T2) with a detection time (53) for the security certificate (Cert), and the method involves a matching identifier (4) stored in the memory (6, 22) prompting the security certificate (Cert) associated with this identifier (4) to be the basis for a subsequent encrypted data transmission, and the detection time (53) for the security certificate (Cert) being updated to a current system time, no matching identifier (4) stored in the memory (6, 22) prompting the first subscriber (T1) to perform security certificate verification with the second subscriber (T2) and, in the event of verification, storing an entry (31-35) corresponding to the verified security certificate (Cert) with the current detection time (53) in the memory (6, 22), with the entry (31-35) with the oldest detection date being replaced by this new entry (31-35) if the particular number of entries (31-35) has already been reached, and this verified security certificate (Cert) being the basis for the subsequent encrypted data transmission,
and a known identifier (4) or successful reciprocal security certificate verification prompting the security certificate (Cert) to be taken as a basis for reciprocal interchange of a random number (RND) in RSA-encrypted form which is used to generate a shared session key (60) for both subscribers (T1, T2) independently which are subsequently used for the symmetric encryption of transmitted data.

2. Method as claimed in Claim 1, **characterized in that** the identifier (4) is a public key from an RSA method from the second subscriber (T2).

3. Method as claimed in claim 1, **characterized in that** the subsequent symmetrically encrypted data transmission is effected in TDES-encrypted form.

4. Method as claimed in Claim 1, **characterized in that** the verification of the security certificate (Cert) from the first subscriber (T1) by the second subscriber (T2) and vice versa comprises the following n steps:
in a first step the second subscriber (T2) sends the first subscriber (T1) a first security certificate (Cert.Lev.1), which the second subscriber (T2) subjects to verification using a first public key and in so doing ascertains a second public key,
if the verification results in authenticity then the first step is repeated (n-1) times using a further transmitted security certificate (Cert.Lev.1, 2) and the second public key ascertained in the previous step instead of the first public key, with a new second public key and a verification result always being obtained.

5. Method as claimed in Claim 1, **characterized in that** n = 3.

## Revendications

1. Procédé permettant la transmission sécurisée de données entre un premier usager (T1) et un deuxième usager (T2), notamment entre le tachygraphe (51) d'un véhicule utilitaire et des cartes à puce (50) comportant chacune au moins une mémoire de données, où le premier usager (T1) comporte une mémoire (6, 22), dans laquelle sont stockées un certain nombre d'inscriptions (31-35), comprenant chacune des indicatifs (4) de deuxièmes usagers (T2), où ledit procédé inclut que le premier usager (T1) sollicite du deuxième usager (T2) un indicatif (4) et où le premier usager (T1) compare cet indicatif (4) aux indicatifs (4) stockés dans la mémoire (6, 22), **caractérisé par le fait que** les inscriptions (31-35) comprennent chacune des certificats de sécurité (Cert) de deuxièmes usagers (T2), lesdits certificats de sécurité correspondant aux indicatifs (4) et étant accompagnés d'une date de saisie (53) du certificat de sécurité (Cert), et que le procédé inclut que,
lorsqu'un indicatif (4) concordant est stocké dans la mémoire (6, 22), le certificat de sécurité (Cert) correspondant à cet indicatif (4) constitue la base d'une transmission cryptée de données qui suit et la date de saisie (53) du certificat de sécurité (Cert) est actualisée sur une horloge à temps réel du système,
lorsqu'aucun indicatif (4) concordant n'est stocké dans la mémoire (6, 22), le premier usager (T1) exécute une vérification du certificat de sécurité avec le deuxième usager (T2) et, en cas de résultat positif, mémorise, dans la mémoire (6, 22) avec la date de saisie (53) en temps réel, une inscription (31-35) correspondant au certificat de sécurité (Cert) vérifié, alors que, si le nombre déterminé d'inscriptions (31-35) est déjà atteint, l'inscription (31-35) ayant la date de saisie la plus ancienne est remplacée par cette nouvelle inscription (31-35) et ce certificat de sécurité (Cert) vérifié constitue la base de la transmission cryptée de données qui suit,
et, dans le cas où l'indicatif (4) est connu ou dans le cas où la vérification réciproque du certificat de sécurité sur la base du certificat de sécurité (Cert) est positive, un échange réciproque d'un nombre aléatoire (RND) suit en une forme cryptée selon RSA, au moyen de laquelle une clef de session (60) commune est générée par les deux usagers (T1, T2) indépendamment l'un de l'autre et, ensuite, cette clef sert au cryptage symétrique des données transmises.

2. Procédé selon la revendication 1, **caractérisé par le fait que** l'indicatif (4) est une clef publique d'un procédé RSA du deuxième usager (T2).

3. Procédé selon la revendication 1, **caractérisé par le fait que** la transmission symétrique cryptée de données qui suit est effectuée en cryptage 3DES.

4. Procédé selon la revendication 1, **caractérisé par le fait que** la vérification du certificat de sécurité (Cert) du premier usager (T1) par le deuxième usager (T2) et inversement comprend les étapes suivantes:
dans une première étape, le deuxième usager (T2) envoie au premier usager (T1) un premier certificat de sécurité (Cert.Lev.1) que le deuxième usager (T2) soumet à une vérification en utilisant une première clef publique et, dans ce cadre, détermine une deuxième clef publique,
si la vérification aboutit à l'authenticité, la première étape est répétée (n-1) fois en utilisant un autre certificat de sécurité (Cert.Lev.1,2) envoyé et la deuxième clef publique déterminée à l'étape précédente à la place de la première clef publique, à la suite de quoi il en résulte toujours une nouvelle deuxième clef publique et un nouveau résultat de vérification.

5. Procédé selon la revendication 1, **caractérisé par le fait que** n = 3.
